Europäisches Patentamt

European Patent Office

Office européen des brevets

(11) Veröffentlichungsnummer: **0 359 995**
**A2**

## (12) EUROPÄISCHE PATENTANMELDUNG

(21) Anmeldenummer: 89115090.6

(22) Anmeldetag: 16.08.89

(51) Int. Cl.⁵: **F16J 13/24**

(30) Priorität: 05.09.88 DE 3829996

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: XOMOX INTERNATIONAL GMBH & CO.
Von-Behring-Strasse 15
D-8990 Lindau(DE)

(72) Erfinder: **Gonsior, Wolfgang**
Im Obstgarten 10
D-8990 Bodolz(DE)

(74) Vertreter: **Riebling, Peter, Dr.-Ing.**
Patentanwalt Rennerle 10 Postfach 31 60
D-8990 Lindau/B.(DE)

(54) **Bolzenverriegelung als Sicherheitsverschluss für einen schwenkbar gelagerten Deckel.**

(57) Beschrieben wird eine Bolzenverriegelung als Sicherheitsverschluß für einen an einem Behälter schwenkbar gelagerten Deckel, wobei ein in Bohrungen verschiebbarer Bolzen hintereinander mehrere Abschnitte aufweist derart, daß jedem der unterschiedlich profilierten Abschnitte eine Schließlage des Deckels, eine angehobene Sicherheitsstellung des Deckels und eine Entriegelungsstellung des Deckels zugeordnet ist. Ein unter Druck stehender Behälter wird daher erst zwangsweise entlüftet, ehe der Decke hochgeschwenkt werden kann.

EP 0 359 995 A2

## Bolzenverriegelung als Sicherheitsverschluß für einen schwenkbar gelagerten Deckel

Die Erfindung betrifft eine Bolzenverriegelung mit den Merkmalen des Oberbegriffes von Patentanspruch 1.

Derartige Bolzenverriegelungen sind bekannt. Der die Verriegelung bewirkende Bolzen besteht aus einem glatten, einheitlichen Rundprofil. Nachteilig hierbei ist es, daß der Deckel beim Herausziehen des Bolzens aus den Bohrungen durch einen im Behälter eventuell vorhandenen Restdruck leicht hochgeschleudert werden kann, was dann gegebenenfalls Verletzungen hervorruft und wobei auch der Behälterinhalt herausgeschleudert wird.

Zur Sicherheit gegen das Hochschleudern des Deckels ist es weiterhin bekannt, zwischen Deckel und Behälter zusätzliche Sicherheitsverschlüße, insbesondere federbelastete Klinken oder dergleichen, anzuordnen, die beim Öffnen des Deckels ohne dessen hochschleudern die Entlüftung des Behälters gewährleisten. Diese zusätzlichen Sicherheitseinrichtungen sind jedoch relativ aufwendig.

Der Erfindung liegt daher die Aufgabe zugrunde, eine Bolzenverriegelung mit den Merkmalen des Oberbegriffes von Patentanspruch 1 vorzuschlagen, der nicht nur einfach und konstruktiv kostengünstig hergestellt werden kann, sondern der auch als Sicherheitsverschluß wirkt derart, daß beim Öffnen des Deckels zwangsweise vor dem vollständigen Öffnen des Deckels zunächst ein Luftspalt geschaffen wird, über den der im Behälter vorhandene Druck (Restdruck) gegebenenfalls abgelassen wird, so daß zwangsweise eine Entlüftung des Behälters beim Öffnen des Deckels gewährleistet ist, ohne daß die Gefahr des Hochschleudern des Deckels besteht.

Die Lösung dieser Aufgabe erfolgt durch die kennzeichnenden Merkmale von Patentanspruch 1.

Die Merkmale von Patentanspruch 2 erleichtern das Auffinden der jeweiligen aktiven Position der verschiedenen Abschnitte des Bolzens.

Die Merkmale der Patentansprüche 3 bis 7 beschreiben bevorzugte Profilierungen der erwähnten Abschnitte des Bolzens, wobei die Profilierungen entsprechend den Patentansprüchen 3,4 und 6 gegenüber den Merkmalen der Patentansprüche 5 und 7 abermals bevorzugt werden, und zwar weil diese Profilierungen einerseits besonders einfach herstellbar sind und andererseits eine besonders sichere Funktion gewährleisten, auch bei höheren Drücken.

Durch die Merkmale von Patentanspruch 8 wird eine Zwangsführung des Bolzens erreicht, wodurch dessen Bedienung weiterhin vereinfacht wird.

Die Merkmale der Patentansprüche 9 und 10 geben Möglichkeiten an, wie der Bolzen mit anderen Mitteln zur Lösung der Erfindungsaufgabe zusammenarbeiten kann.

Der Kern der Erfindung liegt darin, daß am Bolzen in Aneinanderreihung gegeneinander versetzt Abflachungen und gegebenenfalls ein Exzenter vorgesehen sind, die beim Herausziehen des Bolzens nacheinander in Funktion treten, wobei der Exzenter, wenn er vorgesehen ist, oder eine an seine Stelle tretende Profilierung, im wesentlichen zur Entlüftung dient und die Abflachungen in Verbindung mit Anschlägen am Bolzen bzw. an der Halteplatte des Deckels eine Fehlbedienung ausschalten.

Derart ist die Entfernung des Bolzens aus der Verriegelung zwangsweise nur auf eine bestimmte erwünschte Art möglich.

Im Bereich der Abflachungen kann der Bolzen, ohne daß eine Drehung möglich wäre, nur aus der Verriegelung herausgezogen werden.

Im Bereich des Exzenters oder der entsprechenden Profilierung setzt -sobald dieser erreicht ist - die zwangsweise Entlüftung des Behälters ein, entweder durch Hochdrücken des Deckels durch den Restdruck im Bereich der Querschnittsverringerung des Bolzen am Exzenter bzw. an der Profilierung oder durch eine zusätzliche Betätigung des Öffnungshebels, um den Deckel geringfügig im Öffnungsbereich des Exzenters anzuheben.

Nach einer Drehung des Bolzens in Verbindung mit einem erneuten Schließen des Deckels kann der Bolzen leicht im Bereich seiner Abflachung herausgezogen werden.

In Verbindung mit den Abflachungen am Bolzen und der Querschnittsverengung der Bohrungen vorzugsweise durch einen Schlitz der Halteplatte, wobei ein Schenkel der Halteplatte die Querschnittsverengung der Bohrungen herbeiführt, werden für den Bolzen Anschläge geschaffen, zum einen für die Grundstellung und zum anderen in der Entlüftungsstellung des Deckels, wobei erst nach einer Drehung des Bolzens dessen Entfernung mit der damit verbundenen Entriegelung des Deckels möglich wird.

Auf diese Weise wird in konstruktiv einfacher Art eine Sicherheitsverriegelung erreicht mit einem Zwangsablauf bei der Entriegelung des Deckels, insbesondere mit einer Zwangsentlüftung des Behälters, ohne Gefahr, daß der Deckel hochgeschleudert wird.

In einfacher Art wird bei dieser Ausführungsform der Bolzen zunächst bis zu einem Zwangsanschlag am Schenkel des Schlitzes bzw. der Halteplatte gezogen, wodurch der Exzenter bzw. die entsprechende Profilierung des Bolzens zwischen die Lagerplatten in den Bereich des Schlitzes geführt wird. Im weiteren kann der Bolzen nun gedreht werden, wodurch mittels des Exzenters der Deckel zur Entlüftung geringfügig geöffnet wird, ohne daß der Deckel hochgeschleudert werden kann, weil der Bolzen mit geringerem Querschnitt weiterhin die Bohrungen zur Verriegelung durchgreift.

Ist in dem Behälter ein Restdruck ausgebildet, so wird im Öffnungsbereich des Exzenters bzw. der Profilierung die Halteplatte im Bereich des Schlitzes selbsttätig angehoben bzw. die Betätigungsvorrichtung wird über die Steuernocke hochgedrückt, wobei derart in dieser Stellung des Bolzens eine zwangsweise Entlüftung des Behälters stattfindet.

Der Bolzen kann nun nach Niederdrücken des Betätigungshebels, um den Deckel wieder zu schließen, nach der vorherigen Drehung des Bolzens, gänzlich herausgezogen werden. Hierdurch wird der Deckel entriegelt und kann ohne Gefahr des Hochschleuderns über den Betätigungshebel geöffnet werden.

Je nach Nennweite des Deckels ist es vorgesehen, Exzenter bzw. Profilierungen unterschiedlichen Querschnitts auszubilden. Hierbei hängt vom Querschnitt des Exzenters bzw. der Profilierung die Höhe des Entlüftungsspalts ab, wobei für verschiedene Nennweiten des Deckels unterschiedliche Lüftungsspalte vorgesehen sind.

Im folgenden wird die Erfindung anhand von lediglich Ausführungswege darstellende Zeichnungen näher erläutert. Hierbei gehen aus den Zeichnungen und ihrer Beschreibung weitere erfindungswesentliche Merkmale und Vorteile der Erfindung hervor.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung -offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Es zeigen:

Figur 1: die Bolzenverriegelung an einem Deckel in geschlossenem Zustand,

Figur 1a: die Bolzenverriegelung nach Figur 1 im Bereich der Lagerplatten im Längsschnitt,

Figur 2: die Bolzenverriegelung in einer ersten Entriegelungsstellung,

Figur 2a: die Bolzenverriegelung nach Figur 2 im Bereich der Lagerplatten im Längsschnitt,

Figur 3: die Bolzenverriegelung an dem Deckel in Entlüftungsstellung, gemäss einer zweiten Stellung des Bolzens,

Figur 3a: die Bolzenverriegelung nach Figur 3 im Bereich der Lagerplatten im Längsschnitt,

Figur 4: die Bolzenverriegelung an dem Deckel nach einer Drehung des Bolzens zur weiteren Entriegelung,

Figur 4a: die Bolzenverriegelung nach Figur 4 im Bereich der Lagerplatten im Längsschnitt,

Figur 5: die Bolzenverriegelung in der dritten Stellung bzw. der Endstellung,

Figur 5a: die Bolzenverriegelung nach Figur 5 im Bereich der Lagerplatten im Längsschnitt,

Figur 6: den Deckel am Behälter in geöffnetem Zustand,

Figur 6a: die Bolzenverriegelung nach Figur 6 in der Endstellung,

Figur 7: den Bolzen der erfindungsgemässen Bolzenverriegelung,

Figur 7a, Figur 7b, Figur 7c: Querschnitte des Bolzens entlang den Schnittlinien A-B, C-D, E-F nach Figur 7,

Figur 7b1: eine bevorzugte Abänderung des Profils nach Figur 7b,

Figur 7c1: eine bevorzugte Abänderung des Profils nach Figur 7c,

Figur 8: die Schließlage des Deckels bei der Ausführungsform des Bolzens nach Figur 7b1 und Figur 7c1,

Figur 9: den Deckel in dieser zweiten Ausführungsform in der angehobenen Sicherheitsstellung,

Figur 10: den vollständig entriegelten Deckel kurz vor dem Öffnen.

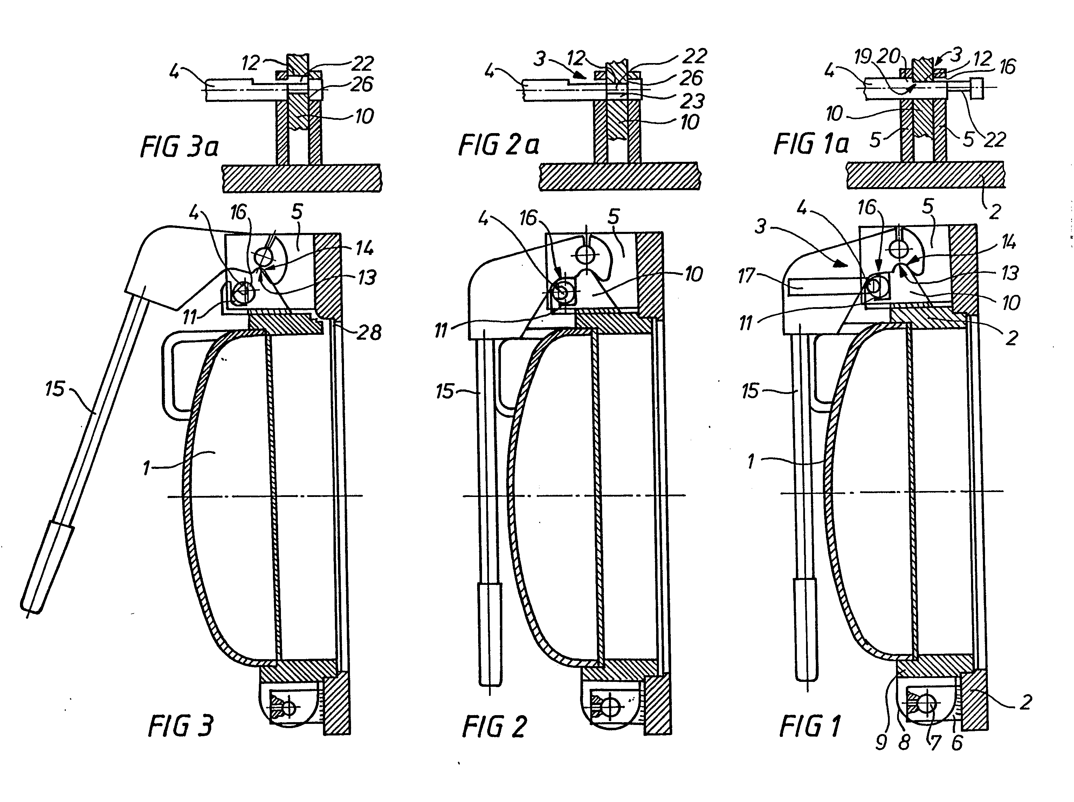

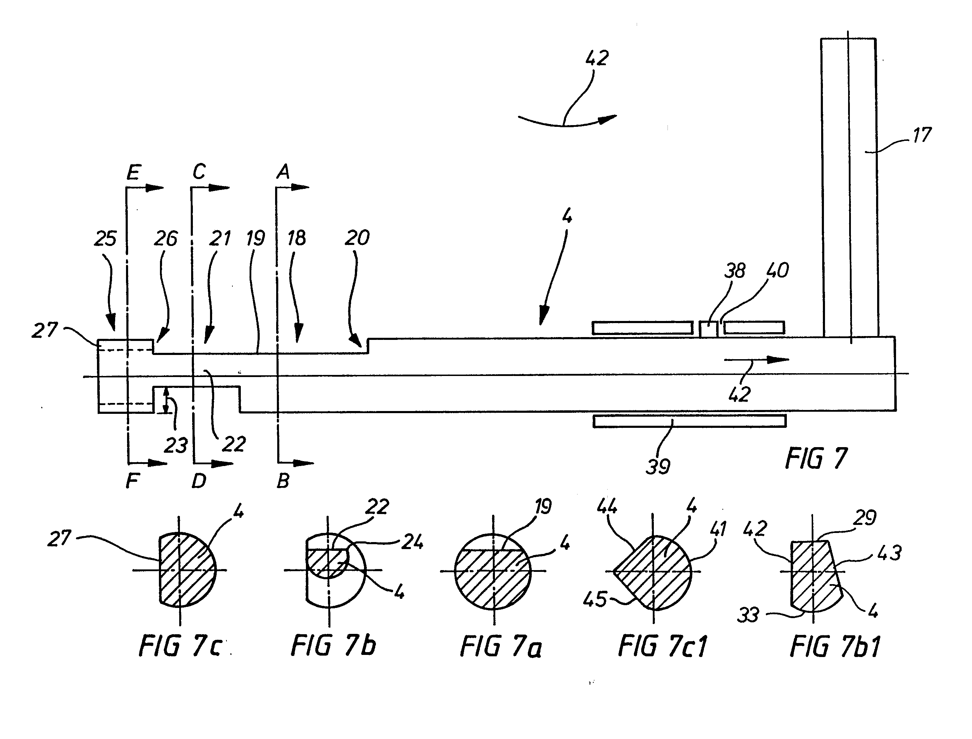

In den Figuren 1 bis 6 ist die Funktion einer Bolzenverriegelung 3 in verschiedenen Stellungen bzw. Abschnitten dargestellt in Verbindung mit einem Bolzen 4 nach Figur 7, wobei ein Deckel 1 am Flansch 2 eines nicht näher dargestellten Behälters geöffnet wird und zwar in Verbindung mit der Bolzenverriegelung 3, wobei der Bolzen 4 zwischen Lagerplatten 5 aus einem Schlitz 11 am Deckel 1 immer weiter in Verbindung mit einer Drehung herausgezogen wird.

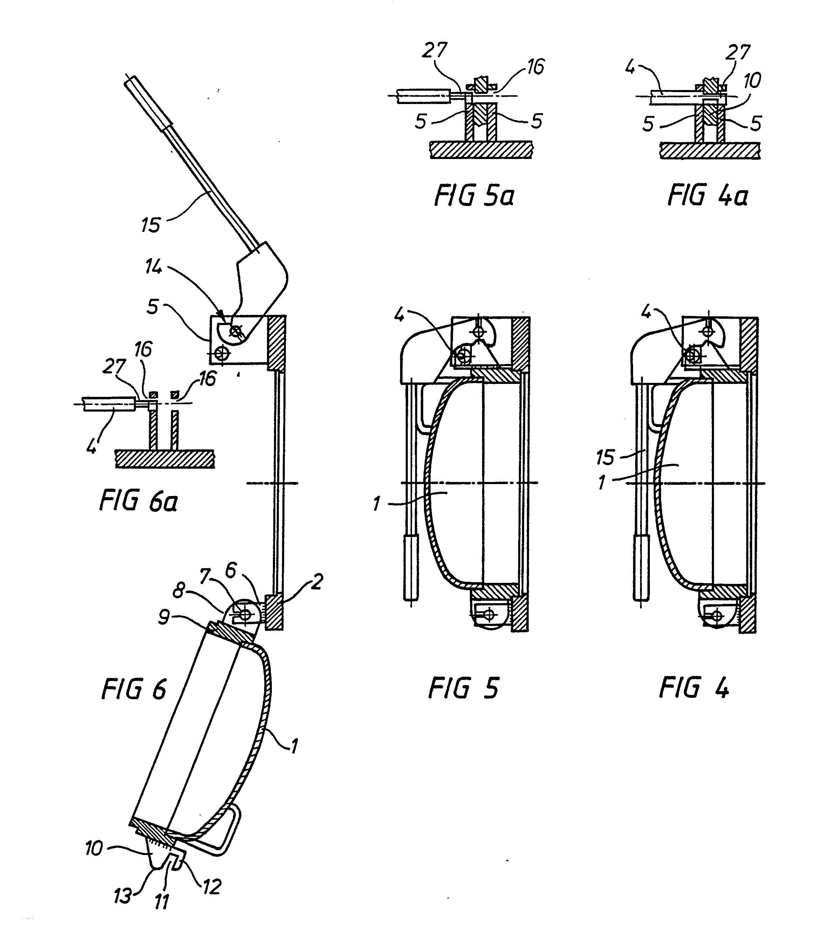

Aus Figur 1, wo der Deckel 1 geschlossen ist und aus Figur 6 bei geöffnetem Deckel 1 ist ersichtlich, daß der Deckel 1 an einer Seite des Behälters am Flansch 2 zwischen Lagerplatten 6 an einer Achse 7 schwenkbar gelagert ist, wobei am Deckel 1 an einer Seite eine Lagerplatte 8 vorgesehen ist.

Der Deckel 1 weist selber einen Flansch 9 auf mit dem daran angeschweissten gewölbten Deckelboden. Die freie schwenkbare Seite des Deckels 1 weist eine Halteplatte 10 auf mit dem darin angeordneten Schlitz 11 mit einem Schenkel 12.

Im weiteren ist an der Halteplatte 10 nach Figur 6 ein Steuernocken 13 ausgebildet, der nach den Figuren 1 bis 5 in eine Steuerkurve 14 eines Betätigungshebels 15 eingreift. Der Betätigungshebel 15 ist zwischen den Lagerplatten 5 am Flansch 2 des Behälters gelagert.

In den Lagerplatten 5 sind fluchtend Bohrungen 16 vorgesehen, durch welche der Bolzen 4 nach Figur 7 in verschiedenen Stellungen nach den Figuren 1 bis 6 mit verschiedenen Querschnitten nach den Figuren 7a, 7b, 7c hindurchgreift.

Der Bolzen 4 nach Figur 7 weist an seinem Ende eine Handhabe 17 auf und in seinem vorderen Bereich verschiedene Querschnitte nach den Figuren 7a, 7b, 7c, wobei ein erster Abschnitt 18 eine Abflachung 19 bildet mit einem Anschlag 20.

Daran schließt sich ein zweiter Abschnitt 21 an, wo ein Exzenter 22 im Bereich des Bolzens 4 gebildet wird.

Der Exzenter weist einen Öffnungsbereich 23 auf nach Art einer Verkleinerung des Querschnitts des Bolzens 4.

Wenn der ansonsten auf der Abflachung 19 geführte Schlitz 11 durch Herausziehen des Bolzens 4 in den Bereich des Exzenters 22 gelangt, so kann der Schlitz 11 ausweichen, so daß sich derart der Deckel 1 im Bereich des Öffnungsbereichs 23 einen Luftspalt 28 bildet, ohne daß der Deckel 1 dabei vollständig entriegelt wird.

Insoweit wird dadurch ein Sicherheitsverschluß mit einer zwangsweisen Entlüftung des Behälters erreicht.

Der Exzenter 22 kann auch verdreht werden, wobei eine Flanke 24 des Exzenters 22 nach Figur 7b auch ohne Restdruck den Deckel 1 im Bereich des Schlitzes 11 anhebt.

Am Bolzen 4 ist im weiteren ein dritter Abschnitt 25 vorgesehen mit einem weiteren Anschlag 26, der im Bereich einer versetzten Abflachung 27 gebildet wird. Im Bereich dieser Abflachung 27 kann der Bolzen 4 gänzlich aus dem Schlitz 11 zwischen den Lagerplatten 5 herausgezogen werden.

Am Bolzen 4 sind demnach Abflachungen 19,27 vorgesehen, zwischen denen der Exzenter 22 angeordnet ist, wobei die Abflachungen 19,27 versetzt zueinander vorgesehen sind.

In besonders einfacher Art wird hierbei der Bolzen 4 zunächst bis zu einem Zwangsanschlag 26 am Schenkel 12 der Halteplatte 10 gezogen, wodurch der Exzenter 22 zwischen die Lagerplatten 5 in den Bereich des Schlitzes 11 geführt wird.

Im weiteren öffnet sich nun der Deckel 1 durch den Restdruck geringfügig und bildet einen Luftspalt 28 und zwar durch das Anheben des Deckels 1 im Öffnungsbereich des Exzenters 22.

Liegt der Behälter ohne Restdruck vor, so kann in diesem Bereich der Bolzen 4 ebenfalls verdreht werden, wobei anschließend der Deckel 1 über den Betätigungshebel 15 wieder verschlossen wird.

In diesem Bereich, d.h. wo der Bolzen 4 mit seinem Exzenter 22 zwischen den Lagerplatten 5 gelagert ist, bleibt weiterhin die Verriegelung bestehen, so daß derart eine Sicherung geschaffen wird, um den Deckel 1 am Hochschleudern zu hindern.

Nach Ablassen eines Restdruckes mit der geringfügigen Öffnung des Deckels 1 wird der Deckel wieder geschlossen und der Bolzen 4 kann nach der vorherigen Drehung gänzlich aus der Verriegelung entfernt werden.

Der Deckel ist somit entriegelt, wobei der Behälter entlüftet ist und der Deckel 1 kann ohne Gefahr des weiteren Hochschleuderns über den Betätigungshebel 15 geöffnet werden.

Das wesentliche der Verriegelung liegt darin, daß Bolzen 4 in Aneinanderreihung gegeneinander versetzt Abflachungen 19,27 und ein Exzenter 22 vorgesehen sind, wobei der Exzenter 22 im wesentlichen zur Entlüftung dient und die Abflachungen 19,27 eine Fehlbedienung ausschalten. Im Bereich der Abflachungen 19,27 kann der Bolzen 4 - ohne daß eine Drehung möglich wäre - nur aus der Verriegelung in Längsrichtung herausgezogen werden.

Im Bereich des Exzenters 22 setzt beim Herausziehen des Bolzens 4 die zwangsweise Entlüftung des Behälters 1, entweder durch Hochdrücken des Deckels 1 durch den Restdruck oder durch eine zusätzliche Betätigung des Öffnungshebels 15, um den Deckel 1 geringfügig im Öffnungsbereich 23 des Exzenters anzuheben. Im Bereich des Exzenters 22 kann der Bolzen 4 verdreht werden, um derart im Bereich der Abflachung 27 die dritte Stellung bzw. die Endstellung des Bolzens zu erreichen, wo der Bolzen gänzlich aus der Verriegelung herausgezogen werden kann.

Auf diese Weise wird in konstruktiv einfacher Art eine Sicherheitsverriegelung erreicht mit einem Zwangsablauf bei der Entriegelung des Deckels insbesondere mit einer Zwangsentlüftung des Behälters, ohne Gefahr, daß der Deckel hochgeschleudert wird.

Die Funktion der Bolzenverriegelung wird nun anhand der Figuren 1 bis 6 bzw. den Figuren 1a bis 6a noch näher erläutert:

Die Figur 1 zeigt den Deckel 1 in geschlossenem Zustand, insbesondere in Verbindung mit dem abgesenkten Betätigungshebel 15, wobei die Steuerkurve 14 den Steuernocken 13 des Deckels 1 umgreift.

Der Schlitz 11, insbesondere nach Figur 6 erkennbar, befindet sich zwischen den Lagerplatten 5 im Bereich von Bohrungen 16, wobei der Bolzen 4 durch den Schlitz 11 innerhalb der Bohrungen 16 hindurchgreift.

Aus Figur 1a ist ersichtlich, daß hierbei der Deckel 12 der Halteplatte 12 die Bohrung 16 geringfügig überdeckt nach Art einer Querschnittsverengung. Innerhalb dieser Querschnittsverengung ist der Bolzen 4 nach Figur 7 im Bereich seiner Abflachung 19 eingeschoben und schlägt dabei nach Art einer Grundstellung mit dem Anschlag 20 am Schenkel 12 an.

In Figur 2 ist der Bolzen 4 bis zum Anschlag 26, der nach Figur 7 am Exzenter 22 gebildet wird, aus den Bohrungen 16 bzw. dem Schlitz 11 zwischen den Lagerplatten 6 herausgezogen.

Aus Figur 2a wird deutlich, daß dabei der Exzenter 22 mit seinem Öffnungsbereich in den Bereich des Schlitzes 11 der Halteplatte 10 gelangt, was der zweiten Stellung des Bolzens bzw. der Entlüftungsstellung des Behälters entspricht.

Im Öffnungsbereich 23 kann nun der Deckel 1 einen Luftspalt 28 bilden, wobei evtl. durch den Restdruck im Behälter der Betätigungshebel 15 angehoben wird.

Der Behälter 1 wird insoweit über den Öffnungsbereich 23 des Exzenters 22 zwangsweise entlüftet, wobei weiterhin die Verriegelung durch den Bolzen 4 gewährleistet ist. Derart kann der Deckel 1 ohne Gefahr des Hochschleuderns nur geringfügig im Öffnungsbereich 23 öffnen.

Nach Figur 2a liegt in dieser Stellung des Bolzens 4 der Anschlag 26 am Schenkel 12 der Halteplatte 10 an.

In Figur 3 ist der Betätigungshebel 15 angehoben, wodurch der Luftspalt 28 gebildet wird, wobei der Betätigungshebel 15 entweder über den Restdruck im Behälter in Verbindung mit der Steuernocke 13 an der Steuerkurve 14 angehoben wird oder der Betätigungshebel 15 wird evtl. ohne Restdruck im Behälter vonhand betätigt.

In Figur 3a ist dargestellt, daß die Halteplatte 10, insbesondere also der Deckel 1, im Öffnungsbereich 23 angehoben ist, wobei der Bolzen 4 weiterhin mit dem Anschlag 26 an der Halteplatte 10 gegen weiteres Herausziehen gesichert ist.

Aus der Entlüftungsstellung nach den Figuren 3, Figur 3a wird der Deckel 1 wieder geschlossen, wobei nach Figur 4a der Bolzen 4 um 90° gedreht wird.

Bei dieser Drehung des Bolzens 4 gelangt nun die versetzt angeordnete Abflachung 27 nach Figur 7 bzw. Figur 7c in den Schlitzbereich der Halteplatte 10.

Aus den Figuren 3 bzw. 3a in Verbindung mit den Figuren 4 bzw. 4a wird deutlich, daß bei einer Drehung des Exzenters 23 der Halteplatte 10 im Bereich des Schlitzes 11 bzw. der Deckel 1 zunächst angehoben wird.

Bei einer weiteren Verdrehung des Bolzens 4 um 90° gelangt die Halteplatte 10 wieder in einen Bereich einer Querschnittsverengung am Exzenter 22, wodurch der Deckel 1 über den Betätigungshebel 15 nun ohne Restdruck wieder geschlossen werden kann.

Die Figur 5 zeigt den Deckel 1 im geschlossenen Zustand nach Figur 1, allerdings mit um 90° verdrehtem Bolzem 4, wobei der Behälter nun entlüftet vorliegt.

Nach Figur 5a in Verbindung mit Figur 6a kann nun der Bolzen 4 im Bereich der Abflachung 27, was der dritten Stellung bzw. der Endstellung entspricht, leicht gänzlich aus den Bohrungen 16 entfernt werden.

Die Figur 6 zeigt den geöffneten Deckel 1 bei vollständiger Entriegelung des Deckels 1 durch den Bolzen 4.

Durch Änderungen des Querschnitts des Exzenters 22 nach Figur 7b können für verschiedene Nennweiten der Deckel 1 verschieden große Öffnungsbereiche 23 geschaffen werden, so daß unterschiedlich große Luftspalte 28 entstehen.

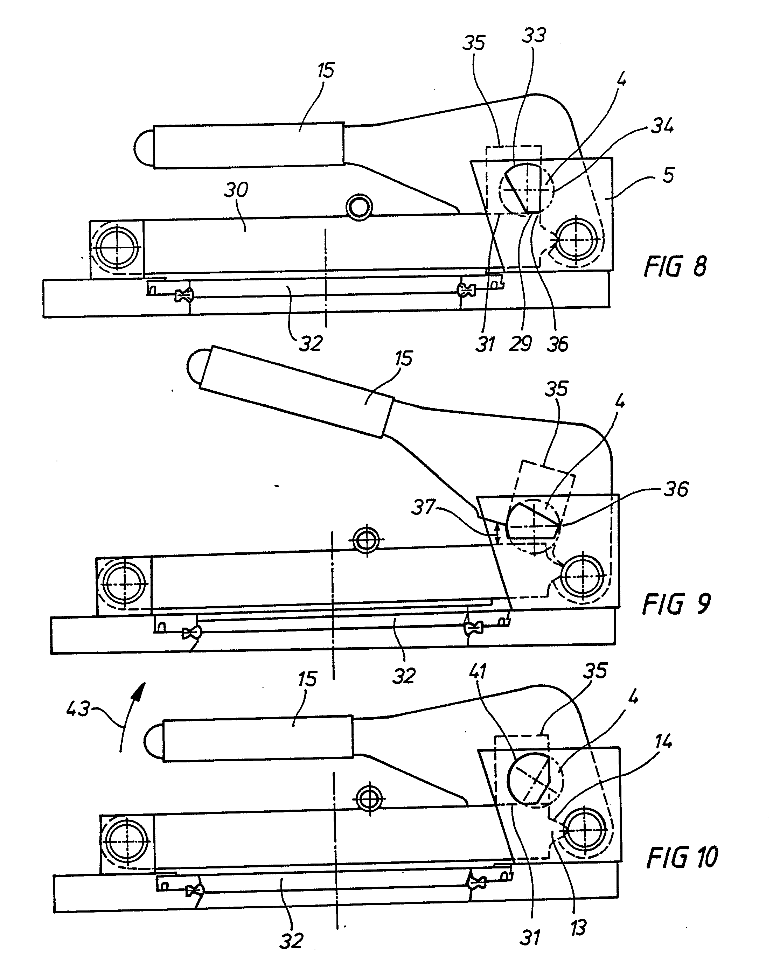

Die Formgebung des Bolzens 4 nach den Figuren 7b und 7c ist konstruktiv etwas schwierig herzustellen und auch die damit erzielbaren Auflageflächen in der Endlagenposition sind bei höheren Drücken nicht immer ausreichend. Es werden daher die Profilierungen nach Figur 7b1 bzw. Figur 7c1 bevorzugt, die ebenfalls Schnitte längs der Linien C-D bzw. E-F darstellen. Im folgenden wird diese zweite Ausführungsform anhand der Figuren 7,7a,7b1,7c1,8,9 und 10 näher erläutert. Dabei zeigt Figur 8 den Deckelin seiner Schließlage, Figur 9 dessen angehobene Sicherheitsstellung und Figur 10 den vollständig entriegelten Deckel kurz vor dem Öffnen.

Bei dieser zweiten Ausführungsform entfällt, verglichen mit der ersten Ausführungsform nach Figur 1 bis 6, der Schenkel 12 mit dem Schlitz 11. Stattdessen ist eine gerade Auflagefläche 31 eines Deckelträgers 30 für den Bolzen geschaffen. Der Deckel nach Figur 8 bis 10 ist auch nicht als gewölbter Deckel ausgebildet, sondern als Flachdeckel 32. Die Ausbildung des Deckels hängt im übrigen von der Nennweite der zu verschließenden Öffnung ab.

In Figur 8 liegt die Auflagefläche 31 des Deckelträgers 30 an einer Fläche 29 des Bolzens 4 an. Damit wird eine großflächige geradlinige Abstützung der beiden aneinander liegenden Flächen 31 und 29 gewährleistet und zur Abstützung des Bolzens 4 dient ein Teilumfang 33 des Bolzens 4, der in der gezeigten Stellung in Bohrungen 34 der einander gegenüberliegenden Lagerplatten 5 anliegt.

Damit wird eine voll belastbare Anlagefläche geschaffen, so daß mit dieser besonderen Verriegelung die zulässigen Betriebsüberdrücke zuverlässig beherrscht werden können.

Bei der vorher genannten Ausführungsform nach den Figuren 1 bis 7 war dies nicht vollständig gewährleistet, weil der Bolzen 4 in der Pos. Figur 1a abgeflacht war und daher nur mit seinen runden Seitenteilen in dem Bereich der Bohrung 34 der Lagerplatte 5 auflag. Dies wird mit der zweiten Ausführungsform vermieden.

Wichtig ist, daß die Querschnitte des Bolzens 4 gemäß den Zeichnungen 7c1 und 7b1 nun so ausgelegt sind, daß in allen Stellungen des Deckels und des dazugehörenden Verriegelungshebels die Querschnitte so gewählt sind, daß die geforderten zulässigen Betriebsüberdrücke sicher beherrscht werden.

Es wurde erläutert, daß bei der zweiten Ausführungsform nach den Figuren 8 bis 10 der Schlitz 11 mit der Nase 12 entfällt. Diese Teile sind jetzt durch eine Ausnehmung 35 im Betätigungshebel 15 ersetzt. Damit ist gewährleistet, daß beim Anheben des Betätigungshebels 15 eine Freistellung gegeben ist, die gewährleistet, daß der Deckel 32 zwangsweise in seine Entlüftungsstellung geführt wird.

Man sieht dies beim Übergang von der Figur 8 auf die Figur 9, weil die Kante 36 in Figur 8 ausgelenkt wird (vergleiche Figur 9), und zwar durch Drehung des Bolzens im Gegenuhrzeigersinn und damit gleichzeitig sich im Bereich der Ausnehmung 35 abwälzt und damit wird Platz geschaffen (vergleiche Pos. 37), so daß der Deckel 32 in seine Entlüftungsstellung hochgehoben werden kann.

Zu der Funktion des Bolzens 4 wird bezüglich der ersten Ausführungsformen der Figuren 1 bis 7 sowie der zweiten Ausführungsformen der Figuren 8 bis 10 angemerkt, daß in beiden Ausführungsformen der Bolzen 4 mit einer Kulissenführung zusammenwirkt, so daß sichergestellt ist, daß die vorher und nachfolgend beschriebenen Verschiebungs- und Drehwege des Bolzens stets gleichbleibend und unter Beobachtung des Benutzers abgewickelt werden können.

Hierbei ist am Außenumfang des Bolzens 4 ein Vorsprung, Stift oder Bolzen 38 angeordnet, der in eine nicht näher dargestellte Kulissenführung eingreift.

Die Kulissenführung ist fest mit dem Lagerflansch verbunden und besteht im wesentlichen aus einem Rohr 39, welches fest an der einen Seite an der Lagerplatte 5 befestigt ist. In diesem Rohr ist ein Schlitz 40 eingearbeitet, der in der Art einer Kulissenführung ausgebildet ist.

Der Bolzen 38 greift in diesen Schlitz 40 ein und kann lediglich entlang der Schlitzkurve bewegt werden.

Statt der Anordnung eines Rohres 39 an der einen Seite einer Lagerplatte 5 gibt es noch andere Möglichkeiten für die Ausbildung dieser Kulissenführung.

Beispielsweise kann das Rohr 39 durch eine Blechplatte ersetzt werden, in der ein gleicher Schlitz 40 eingearbeitet ist, wobei die Blechplatte wiederum fest an der Lagerplatte 5 befestigt ist.

Die Ausbildung, ob Blechplatte oder Rohr ist abhängig von den Umweltbedingungen und vom Verschmutzungsgrad.

Weiterer wichtiger Vorteil der Kulissenführung ist im übrigen, daß damit der Bolzen 4 zwangsgeführt wird und damit verhindert wird, daß der Bolzen unbeabsichtigt in Richtung seiner Längsachse außer Eingriff mit der Bohrung 34 in der Lagerplatte 5 gelangt. Damit wird also verhindert, daß der Bolzen 4 komplett abfällt, wodurch der Verschluß nicht mehr gewährleistet wäre.

Die Figur 10 zeigt nun die Öffnungsstellung der Anordnung, d.h. die Stellung des Bolzens 4, wobei im Übergang von der Figur 9 auf die Figur 10 der Bolzen 4 in axialer Richtung senkrecht zur Zeichenebene gezogen wird.

Das heißt also, um die Öffnungsstellung zu erreichen muß die gesamte Anordnung erst wieder vollständig geschlossen werden.

Dies ist ein weiteres Sicherheitsmerkmal für den erfindungsgemäßen Verschluß, denn damit ist gewährleistet, daß der Verschluß nur dann geöffnet werden kann, wenn der Behälter vollständig entleert ist.

Bei großen Behältern mit großem Restvolumen kommt es nämlich vor, daß in der Abblasestellung über eine längere Zeit hinweg noch Abblasedrücke von einigen zehntel bar ständig abgeblasen werden. Würde man jetzt in dieser Stellung (Abblasestellung) sofort in die Öffnungsstellung übergehen besteht dann die Gefahr, daß aufgrund des noch bestehenden Restdruckes der Deckel hochgeschleudert wird und unkontrolliert in die Öffnungsstellung gelangt, was mit einer Verletzungsgefahr verbunden ist.

Dadurch, daß durch die besondere Formgebung des Bolzens und der zugeordneten Flächen sichergestellt ist, daß vor dem Öffnen der Deckel wieder vollständig geschlossen werden muß, ist gleichzeitig gewährleistet, daß in dem Behälter wirklich kein Restdruck mehr vorhanden sein kann, denn andernfalls könnte der Deckel nicht geschlossen werden.

Bei toxischen Medien wird sogar - um eine vollständige Entleerung des Behälters zu gewährleisten - die Endstellung des Bolzens, d.h. also die verriegelte, geschlossene Stellung mittels Endschalter überwacht, um sicherzustellen, daß vor Inbetriebnahme des Behälters der Deckel vollständig und ordnungsgemäß geschlossen ist und daß ferner vor öffnen des Verschlußes der Behälter vollständig evakuiert ist.

Die Figur 10 zeigt nun diese Sicherheitsstellung, d.h. die vollständige Schließung des Deckels kurz vor dem Öffnen.

Hierbei ist erkennbar, daß der Bolzen 4 sich mit seinem Außenumfang 41 in der Bohrung 34 der Lagerlaschen 5 abstützt.

In dieser Position könnte jetzt der Deckel den vollen Druck aushalten, wenn unerwarteterweise noch Druck im Behälter sein würde.

Das heißt also, der Deckel kann nicht geschlossen werden, wenn sich noch Druck im Behälter befindet und die Bedienungsperson muß erst in der Abblasestellung nach Figur 9 warten, bis der gesamte Restdruck entwichen ist.

Und nur in der Pos. der Figur 10 kann jetzt der Bolzen 4 senkrecht zur Zeichenebene in axialer Richtung verschoben werden, wobei eine Verschiebung in Pfeilrichtung 42 (vergleiche Figur 7) erfolgt, wodurch nun der Außenumfang 41 des Bolzens 4 außer Eingriff mit der einen Lagerlasche 5 und damit mit der Bohrung 34 kommt, aus der Ausnehmung 35 des Betätigungshebels 15 herausschlüpft und lediglich nur noch in der gegenüberliegenden Ausnehmung 34 der gegenüberliegenden Lagerlasche 5 verharrt.

Wie eingangs ausgeführt wurde, wird ein vollständiges herausfallen des Bolzens 4 durch die vorher beschriebene und in Figur 7 angedeutete Kulissenführung verhindert.

Jetzt erst kann der Hebel 15 in Pfeilrichtung 43 nach oben gezogen werden und der Deckel 32 kann geöffnet werden.

In analoger Weise wie anhand der Figuren 1 bis 7 beschrieben, kommt hierbei die Steuernocke 13 außer Eingriff mit der Steuerkurve 14, wodurch der Deckel vollständig angehoben werden kann.

In der Schließstellung, d.h. wenn der Deckel von der Öffnungsstellung in die Schließstellung bewegt wird, erfolgt der umgekehrte Vorgang, d.h. es muß erst die Steuernocke 13 in Eingriff mit der Steuerkurve 14 des Betätigungshebels 15 gelangen; der Betätigungshebel 15 wird dann in Gegenrichtung zur eingezeichneten Pfeilrichtung 43 nach unten bewegt und hierdurch wird gleichzeitig zwangsläufig der Deckel 32 in seine Schließposition gebracht.

Erst danach tritt dann die Verriegelung in Kraft.

Beim Schließen des Deckels werden die anhand der Figuren 8 bis 10 beschriebenen Vorgänge in umgekehrter Reihenfolge ausgeführt.

Figur 7b1 zeigt neben der Abflachungfläche 29 weitere Abflachungen 42,43 in der Gestalt, daß alle drei Abflachungen 29,42,43 sich nachArt von Sekanten schneiden, wobei das Profil durch den kreisförmigen Teilumfang 33 ergänzt wird.

Figur 7c1 zeigt den kreisförmigen Außenumfang 41, der durch zwei sich schneidende Abflachungen 44,45 zu dem Profil dieses Abschnitts ergänzt wird.

<div align="center">

ZEICHNUNGS-LEGENDE
</div>

1 Deckel

2 Flansch
3 Bolzenverriegelung
4 Bolzen
5 Lagerplatten
6 "
7 Achse
8 Lagerplatte
9 Flansch
10 Halteplatte
11 Schlitz
12 Schenkel
13 Steuernocke
14 Steuerkurve
15 Betätigungshebel
16 Bohrungen
17 Handhabe
18 erster Abschnitt
19 Abflachung
20 Anschlag
21 zweiter Abschnitt
22 Exzenter
23 Öffnungsbereich
24 Flanke
25 dritter Abschnitt
26 Anschlag
27 Abflachung
28 Luftspalt
29 Fläche
30 Deckelträger
31 Auflagefläche
32 Flachdeckel
33 Teilumfang
34 Bohrung
35 Ausnehmung
36 Kante
38 Bolzen, Stift, Vorsprung
39 Rohr
40 Schlitz
41 Außenumfang
42 Abflachung
43 "
44 "
45 "

## Ansprüche

1. Bolzenverriegelung als Sicherheitsverschluß für einen an einem Behälter schwenkbar gelagerten Deckel (1,32) mit einem am Behälter oder am Deckel schwenkbar gelagerten Hebel (15), der über eine Steuerkurve (14), die mit einem am anderen Teil vorgesehenen Steuernocken (13) zusammenarbeitet, und mit einem im Bohrungen (16,34) der Bolzenverriegelung verschiebbaren Bolzen (4) zum Verriegeln bzw. Entriegeln der Bolzenverriegelung, **dadurch gekennzeichnet,** daß der Bolzen (4) in seiner axialen Verschiebungsrichtung hintereinander mehrere Abschnitte (18,21,25) mit gegenüber seinem Rundprofil verringertem, profiliertem Querschnitt aufweist derart, daß jedem der Abschnitte (18,21,25) eine Schließlage des Deckels (1,32), eine angehobene Sicherheitsstellung des Deckels und eine Entriegelungsstellung des Deckels zugeordnet ist.

2. Bolzenverriegelung nach Anspruch 1, **dadurch gekennzeichnet,** daß die Abschnitte (18,21,25) über Anschläge (20,26) definiert sind.

3. Bolzenverriegelung nach Anspruch 1 oder Anspruch 2, **dadurch gekennzeichnet,** daß der erste Abschnitt (18) aus dem Rundprofil und einer Abflachung (19) des Rundprofils besteht.

4. Bolzenverriegelung nach einem der Ansprüche 1 bis 3, **dadurch gekennzeichnet,** daß der zweite Abschnitt (21) aus dem Rundprofil und drei sich schneidenden Abflachungen des Rundprofils besteht.

5. Bolzenverriegelung nach einem der Ansprüche 1 bis 3, **dadurch gekennzeichnet,** daß der zweite Abschnitt (21) aus einem Rundprofil besteht, das kleiner ist als das Ausgangs-Rundprofil, sowie einer Abflachung (22) des Rundprofils.

6. Bolzenverriegelung nach einem der Ansprüche 1 bis 5, **dadurch gekennzeichnet,** daß der dritte Abschnitt (25) aus dem Rundprofil und zwei sich schneidenden Abflachungen des Rundprofils besteht.

7. Bolzenverriegelung nach einem der Ansprüche 1bis 5, **dadurch gekennzeichnet,** daß der dritte Abschnitt (25) aus dem Rundprofil und einer Abflachung (27) des Rundprofils besteht.

8. Bolzenverriegelung nach einem der Ansprüche 1 bis 7, **dadurch gekennzeichnet,** daß am Bolzen (4) radial ein Stift (38) befestigt ist, der in eine ortsfeste Schlitzkurve eines Schlitzes (40) einer Kulissenführung eingreift.

9. Bolzenverriegelung nach einem der Ansprüche 1 bis 8, **dadurch gekennzeichnet,** daß am Deckel eine Halteplatte (10) mit einem von außen frei zugänglichen Schlitz (11) für den Bolzen (4) vorgesehen ist.

10. Bolzenverriegelung nach einem der Ansprüche 1 bis 8, **dadurch gekennzeichnet,** daß am Deckel (32) eine gerade Auflagefläche (31) für den Bolzen (4) ausgebildet ist, der mit einer von außen frei zugänglichen Ausnehmung (35) im Betätigungshebel (15) zusammenarbeitet.

FIG 3a

FIG 2a

FIG 1a

FIG 3

FIG 2

FIG 1

EP 0 359 995 A2

X 19

27    16

5         5

FIG 5a

4         27    10

5    5

FIG 4a

15

14

5

16

27    16    16

4

FIG 6a

4

1

FIG 5

4

15

1

FIG 5

7    6

8

9    2

FIG 6

1

10

13    11    12

FIG 4

X 19

FIG 7

FIG 7c    FIG 7b    FIG 7a    FIG 7c1    FIG 7b1

EP 0 359 995 A2

X 19

FIG 8

FIG 9

FIG 10

X 19